# EUROPEAN PATENT SPECIFICATION

(11) **EP 0 317 644 B1**
(45) Date of publication and mention of the grant of the patent: **06.04.1994**
(21) Application number: 88905221.3
(22) Date of filing: 08.06.1988
(51) Int. Cl.: B29C 49/64, B29C 49/78, B29C 49/08, B29L 22/00

(54) **METHOD OF HEATING THERMOPLASTIC PLASTIC BOTTLE OR PREFORM AND METHOD OF TEMPERATURE CONTROL OF HEATING MEMBER USING SAID HEATING METHOD**
VERFAHREN ZUM ERWÄRMEN EINER FLASCHE ODER EINES VORFORMLINGS AUS THERMOPLASTISCHEM KUNSTSTOFF UND VERFAHREN ZUM STEUERN DER TEMPERATUR EINER HEIZVORRICHTUNG
PROCEDE DE CHAUFFE D'UNE BOUTEILLE OU D'UNE EBAUCHE EN MATIERE SYNTHETIQUE THERMOPLASTIQUE ET PROCEDE DE REGULATION DE LA TEMPERATURE D'UN ORGANE CHAUFFANT

(30) Priority: 09.06.1987 JP 142299/87; 05.11.1987 JP 278239/87; 19.01.1988 JP 7416/88
(43) Date of publication of application: 31.05.1989
(73) Proprietor: TOYO SEIKAN KAISHA, LTD., Tokyo 100 (JP)
(72) Inventor: SUGIYAMA, Ikuo, Yokohama-shi Kanagawa 245 (JP); ISHIBASHI, Kazuhisa, Setagaya-ku Tokyo 154 (JP); TAKAKUSAKI, Nobuyuki, Yokohama-shi Kanagawa 247 (JP); MARUHASHI, Yoshitsugu, Yokohama-shi Kanagawa 223 (JP); NISHIMURA, Yasushi, Yokohama-shi Kanagawa 245 (JP); KOYAMA, Hiroshi, Hoya-shi Tokyo 202 (JP); IIDA, Setsuko, Yokohama-shi Kanagawa 227 (JP); SATO, Koji, Kawasaki-shi Kanagawa 214 (JP)
(74) Representative: Woodcraft, David Charles
(86) International application number: PCT/JP88/00553
(87) International publication number: WO 88/09717

(56) References cited:
- JP-A- 5 611 232
- JP-A- 5 789 929
- JP-A- 6 277 919
- JP-A-60 125 650
- No further relevant documents have been disclosed.

## Description

This invention relates to a method for heating formed products of thermoplastic material for manufacturing bottles made of thermoplastics, and particularly, to a heating method capable of effectively manufacturing bottles of this character within a short period of time.

Bottles made of thermoplastic material such as polyester are widely utilized as containers or bottles for drinks such as fruit juice, coffee, mineral water, carbonated drink such as cola or cider.

The formation of these plastic bottles has been performed by the so called biaxial stretching blow formation method, in which a preform made by an injection molding process is heated to a predetermined temperature, and the thus heated preform is extended axially in a mold by suitable extending rod member and simultaneously blown to extend circumferentially.

In order to heat the preform, a non-contact heating method by means of an infrared ray heater arranged externally has been generally adopted, but recently in accordance with requirement of large-sized containers or bottles, the thickness of the preform has been made large. Accordingly, in spite of the increased time required for the uniform heating in the direction of the thickness of the preform, a speed-up of the manufacturing process thereof has required. The conventional forming method referred to above cannot satisfy these requirements. In order to obviate these defects, there is provided a method, for example disclosed in the Japanese Patent Laid-open Publication No.261024/1986, in which an internal heater is arranged inside the preform in addition to the conventional external heater, or a method by means of a jig, for example disclosed in the Japanese Patent Publication No.43852/1987, in which an extendable rod is heated by high frequency induction heating so as to thereby heat the preform internally and externally. There is also provided a method, for example disclosed in the Japanese Patent Laid-open Publication No.163828/1986, in which a heating pipe is arranged into the preform to internally heat the same.

It is required, however, for bottles made of plastic materials to control the heating level during formation so as to achieve the most suitable thickness distribution in the axial direction thereof in order to properly maintain the strength and the shape of the bottle. For this purpose, it is required to adjust the preform heating temperature along the axial direction of the preform, but with the methods disclosed in the Japanese Patent Laid-open Publication Nos.261024/1986 and 163828/1986 referred to above, the preform can be quickly heated by the internal and external heating thereof, whereby it is difficult to heat the preform with predetermined temperature distribution in the axial direction. Moreover, with the heating by means of the infrared ray heater, since a plurality of heaters are arranged in the axial direction of the preform and electric power to the heaters is regulated as occasion demands, it is difficult to perform the speedy heating and to easily heat an optional portion to the predetermined temperature due to the thermal interference with the respective heaters.

In addition, with the method disclosed in the Japanese Patent Publication No. 43852/1987, a metallic rod disposed in the preform is heated by means of the induction heating, so that it is difficult to measure the temperature of the metallic rod during or just before the induction heating process, thus the heating of the metallic rod cannot be properly controlled. In addition, it is also difficult to suitably supply the preforms, and the temperature control of the individual metallic rod cannot be properly performed in a case where the preform is come out.

US 4 315 725 describes a method of heating a preform in which a plurality of inductively heated heating members is provided. The heating members are provided along a circulation path. The heating members heat the preform internally. An IR heating unit is provided for heating the preform externally. In use the heating unit heats a preform externally while an induction heated heating member heats the preform internally.

In order to exactly control the temperature of the preforms, it is necessary to maintain the temperature of a heating member always exactly to a predetermined temperature, but it is impossible by the conventional method to strictly maintain the temperature to be constant because the temperature of the heating member increases by the absorption of the heating energy and decreases by the heat radiation, or because of the influence with the variation of the heating conditions.

### Disclosure of the Invention

According to the invention there is provided a method of heating a thermoplastic bottle (2) or preform (1) comprising the steps of:
i) providing a plurality of heating members (21) for insertion into an inner hollow portion of the bottle (2) or preform (1) which are disposed at substantially equal intervals and movable along a circulation path,
ii) providing a heating unit (26) outside the bottle (2) or preform (1) for heating the bottle or preform externally,
iii) inserting a heating member (21) into the bottle (2) or preform (1),
iv) simultaneously heating in a first heating zone the bottle (2) or preform (1) internally by the heating member (21) and externally by the heating unit (26),
characterised by
measuring the temperature of the heating member (21) prior to insertion into the bottle or preform and heating by induction in a second heating zone the heating member (21) to a predetermined temperature in accordance with any difference between the measured temperature and the predetermined temperature
Each heating member may be heated in two heating stages, one being with a predetermined heating amount and the other being with a heating amount for compensating for any temperature difference of the respective heating members.

Moreover, the bottle or preform to be heated may be heated with suitable axially varied radiant heat energy distribution such that the heating member is provided with respective portions having outer diameters different from each other in the lengthwise direction thereof, that the winding pitches of the heating coil as the high frequency induction heating member may be varied in the lengthwise direction of the heating member, and the induction heating coil divided into several portions in the axial direction of the heating member and the electric power applied to the respective coil portions in a controlled manner.

In addition, the heating member may be provided with an inner cavity into which is enclosed a substance having a melting point within the target control temperature of the heating member. The heating member is thereby maintained at a substantially constant temperature.

With the embodiment described above, the temperature of the heating member may be controlled by providing at least two inner cavities for the heating member containing substances having melting points different from each other and applying to the heating member an amount of heat in proportion to the temperature difference between the temperature of the heating member and the melting points of the contained substances.

The heating members are heated in accordance with the individual temperature measured by means of a thermometer, so that the temperatures of the heating members are set to predetermined values when inserted into the preforms, thus the preforms are heated to the desired temperature. The axially varied radiant heat energy distribution is applied to the heating member, so that the preform can be heated to a temperature for manufacturing a thermoplastic bottle, thus improving the quality of formed products. In addition, a substance having a melting point ranged within the target range is enclosed in the inner cavity of the heating member, so that the temperature of the heating member can be controlled by the latent heat of the enclosed substance so as to maintain the temperature constant for a long time, thus reducing the heating temperature differences of the respective heating members and, accordingly, manufacturing formed products with high quality.
Fig. 1 is a plan view showing an embodiment according to this invention;
Fig. 2 is a vertical sectional view of a preform to be heated;
Fig. 3 is a vertical sectional view of a thermoplastic bottle manufactured from the preform shown in Fig. 2;
Fig. 4 is a vertical sectional view of a mandrel supporting the preform shown in Fig. 2;
Fig. 5 is a sectional view taken along the line V-V as viewed in Fig. 1;
Fig. 6 is a perspective view of a first induction heating coil;
Fig. 7 is a sectional view taken along the line VII-VII as viewed in Fig. 6;
Fig. 8 is a view showing an arrangement of second induction heating coils;
Fig. 9 is a perspective view showing one example of the second induction heating coils;
Fig. 10 is a sectional view taken along the line X-X as viewed in Fig. 9;
Fig. 11 is a perspective view showing another example of the second induction heating coils;
Fig. 12 is a sectional view taken along the line XII-XII as viewed in Fig. 11;
Fig. 13 is a perspective view showing an induction heating coil;
Fig. 14 is a sectional view taken along the line XIV-XIV as viewed in Fig. 13;
Fig. 15 is a sectional view taken along the line XV-XV as viewed in Fig. 1;
Fig. 16 is a view of the preform in rotating condition;
Fig. 17 is a vertical sectional view of a mandrel core;
Fig. 18 is a partial sectional view of another embodiment of this invention;
Fig. 19 is an enlarged vertical sectional view of a heating member;
Fig. 20 is an enlarged vertical sectional view of a further heating member;
Fig. 21 is an enlarged vertical sectional view of a yet further heating member;
Fig. 22 shows a graph representing a temperature elevation curve concerning the heating member shown in Fig. 19;
Fig. 23 shows a graph representing a temperature cooling curve concerning the heating member of Fig. 19;
Fig. 24 shows a graph representing a temperature elevation curve concerning the heating member of Fig. 20;
Fig. 25 shows a graph representing a temperature cooling curve concerning the heating member of Fig. 20;
Fig. 26 shows a temperature elevation curve of the heating member Shown in Fig. 21; and
Fig. 27 shows a temperature cooling curve of the heating member shown in Fig. 21.

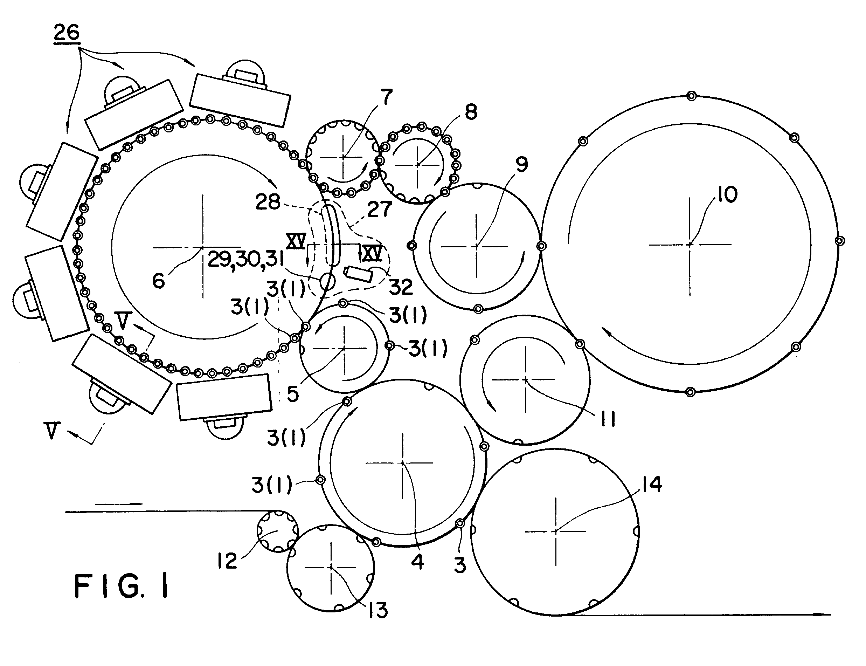

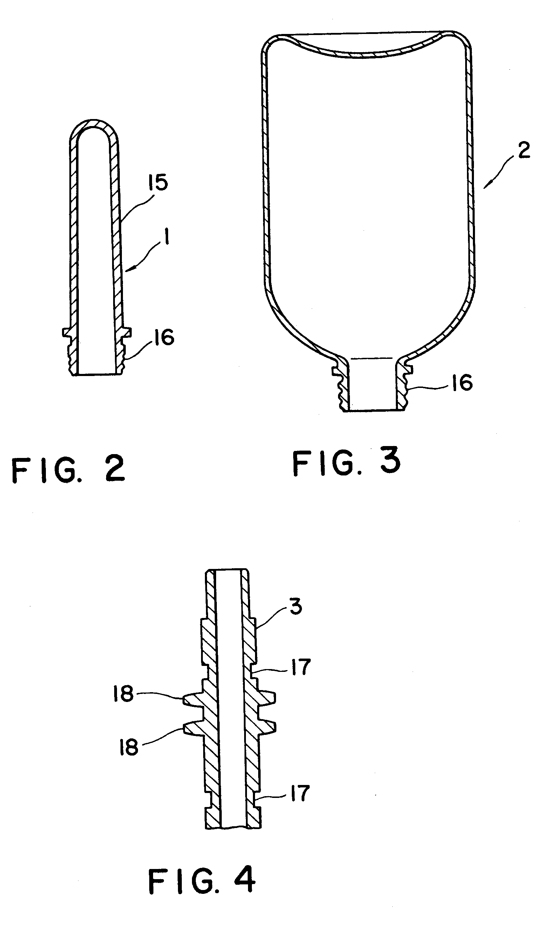

Preferred embodiments of the present invention will be described hereunder with reference to the accompanying drawings, and Fig. 1 illustrates an entire heating system for embodying the method of this invention. The system shown comprises a preform circulation arrangement including a preform hand over table 4 centrally located in Fig. 1, a transfer table 5, a heating station table 6, annealing station table 7 and 8, a second transfer table 9, a blow-formation station table 10, and a third transfer table 11, the preform being circulated in this order and finally returning to the hand over table 4. A plastic-made preform 1 of the shape shown in Fig. 2 and supported by a mandrel 3 (shown in Fig. 4) is heated in the heating station table 6 and blow-formed in the blow-formation station table 10 during the circulation along the respective station tables in the arranged and described order into a plastic bottle 2 as shown in Fig. 3. In more detail, each reform 1 has an elevational section as shown in Fig. 2 and comprises a bottomed cylindrical barrel portion 15 and a mouth or opening portion 16 provided with threads or annular protrusions.

Each mandrel 3 has a cylindrical configuration as shown in Fig. 4 and is integrally provided with circumferential grooves 17,17 for firm support at the respective station tables and sprockets 18,18 for the rotation of the mandrel 3. Chains, not shown, are disposed in a stepped manner over portions of the heating station table 6 and the annealing station table 7 and 8 through which the mandrels 3 pass so as to be engaged with the upper and lower sprockets 18 of the mandrel 3 and driven to impart a rotating motion to the mandrel 3 during the circulation among the respective station tables. During the circulation, the preforms 1,1--- are mounted to the mandrels 3 by a supplying device, not shown, of construction per se known, and the barrel portion 15 of each preform 1 is heated at the heating station table 6 and blow-formed by a known method at the blow-formation station table 10, thus forming a thermoplastic bottle 2 shown in Fig. 3. The thus formed bottle 2 is taken out from the mandrel 3 at the hand over table 4 by a known device and then transferred to the next station through a feed transfer table 14.

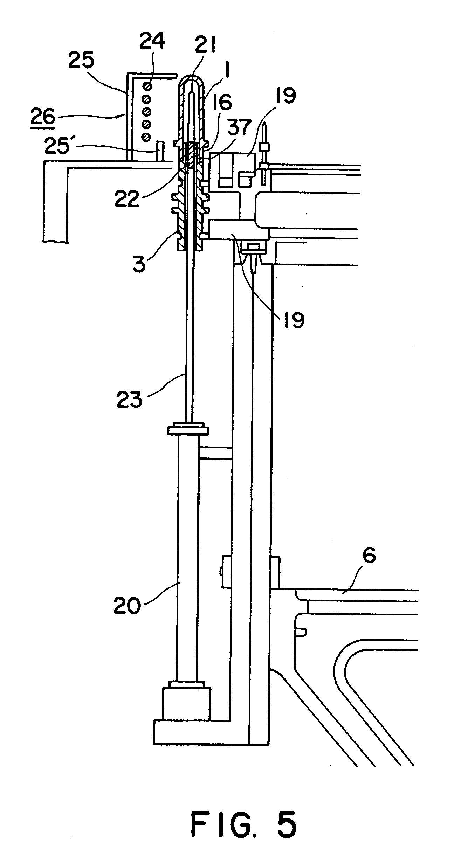

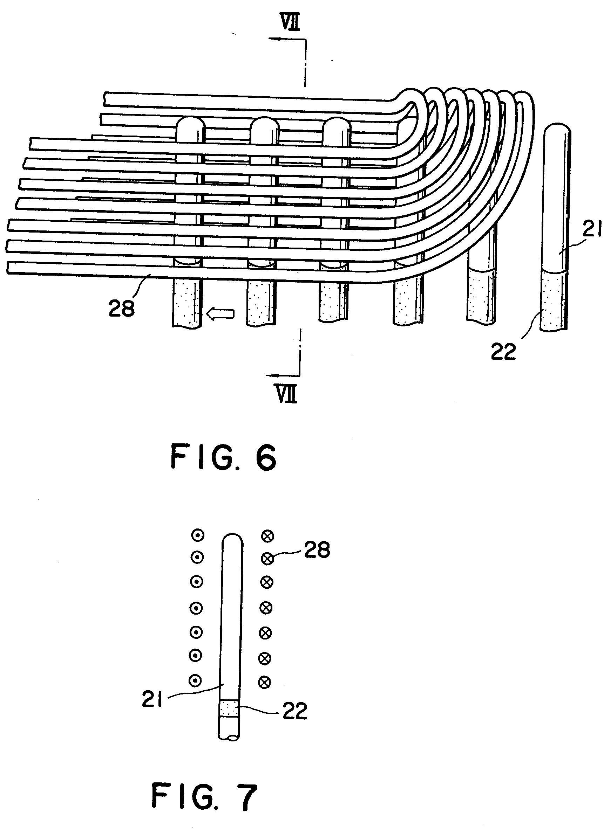

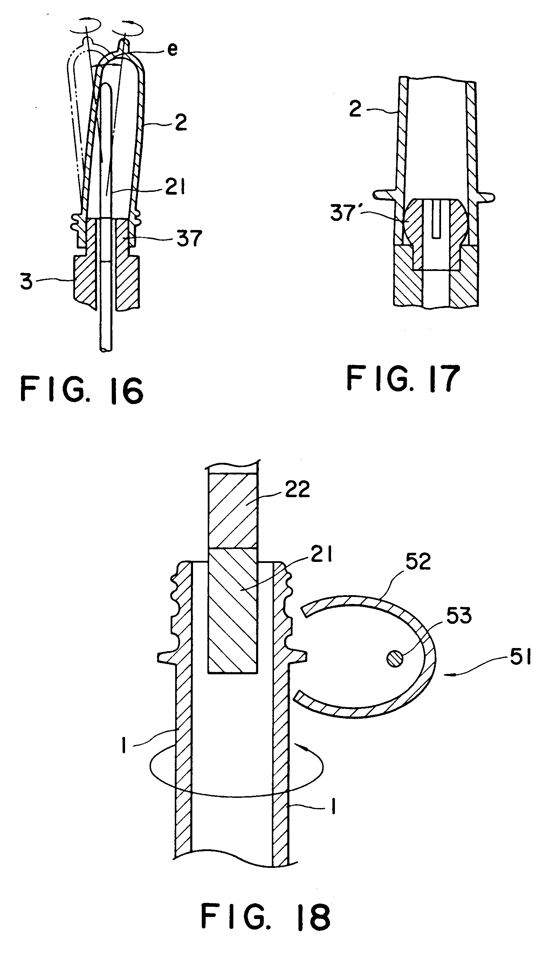

The heating station table 6 will be described hereunder with reference to Fig. 5 to 15. The heating station table 6 has an entirely circular configuration and is equipped with a holding mechanism 19 for supporting the mandrel 3 as shown in Fig. 5, a heating member 21, and an air cylinder assembly 20 which are located at the peripheral portion with equal spaces therebetween. The holding mechanism 19 has a construction adapted to hold the circumferential grooves 17 of the mandrel 3, acts to hold the mandrel 3 at a predetermined position and to release the same at a predetermined position. The heating member 21 is constructed by a rod-shape metallic member capable of being induction heated and is operatively connected to a piston rod 23 of the air cylinder assembly 20 through a heat insulating member 22 in a manner such that when the heating member 21 is upwardly displaced by the actuation of the air cylinder assembly 20, the heating member 21 passes into the mandrel 3 supported by the holding mechanism 19. As shown in Fig. 5, the heat insulating member 22 is disposed between the heating member 21 and the piston rod 23 so as to oppose to the mouth portion 16 of the preform 1 and the mandrel core 37, and accordingly, the heat insulating member 21 serves to suppress transfer of heat from the heating member 21 to the piston rod 23 as well as to suppress the heating of the mandrel core 37. A plurality of heating units constituting a heating zone for heating a member to be heated and a heating member heating zone 27 are arranged on the outside of the heating station table 6 along the circumferential direction thereof, and the heating units 26 comprise infrared ray heaters 24, reflecting mirrors 25 and reflecting mirrors 25' for shutting out the infrared rays so as not to heat the mouth portions 16 of the preforms 1, the heating units 26 being arranged to face portions through which the mandrels 3 pass and adapted to externally heat the preform 1 rotated together with the mandrels 3 with the radiant heat of the infrared rays. The heating member heating zone 27 comprises an infrared ray radiant heat thermometer 32 for measuring the temperature of the heating members 21 and a first induction heating coil 28 for heating the heating member 21 by means of induction heating in response to the measured temperature, the first induction heating coil 28 being arranged at a position in which the mandrels 3 do not pass and it faces the lowered heating members 21 as shown in Fig. 15. Figs. 6 and 7 illustrate one example of the first induction heating coil 28, which has a substantially circular shape adapted to cover the moving passage of the heating members 21 and is constructed, as shown, by laminating fine hair-pin shape coils in multiple layers. Both the end portions thereof are upwardly biased so as to prevent the movement of the movable members. In other words, at the heating station table 6, the mandrels 3 are received during the rotation of the table at the predetermined portion by the mandrel holding mechanism 19, the heating members 21 heated at the heating zone 27 are inserted into the preforms 1 through the respective mandrels 3 to internally heat the preforms 1, and the preforms 1 are externally heated by the heating units 26 when the preforms 1 pass in front of the location of the heating units 26.

In another example of the heating zone 27 in which a second heating coil 29 is disposed in addition to the location of the first induction heating coil 28, serving to constantly heat the heating zone 27, to optionally stop the cheating of the heating members 21. According to the arrangement of the second heating coil 29, even in a case where the mandrel 3 is not mounted with the preform 1 and the heating member 21 is directly exposed to the infrared ray heater 24 at the heating zone 27 to a temperature greater than that to which it is normally exposed, the second heating coil 29 serves to stop the heating and to regulate the heating amount to prevent over heating

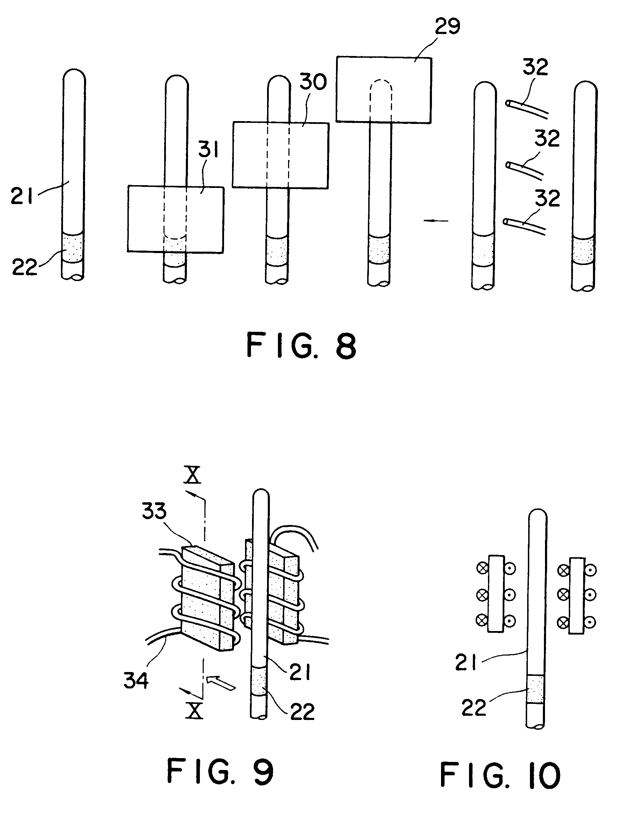

A preferred modification of the second induction heating coil 29 as shown in Fig. 8 may comprise three components such as an induction heating coil 29 opposing an upper portion of the heating member 21, an induction heating coil 30 opposing an intermediate portion of the heating member 21 and an induction heating coil 31 opposing the lower portion of the heating member 21. Figs. 9 and 10 shows arrangement of a coil utilized for these induction heating coils as coils 34 which are wound around two sheets of magnetic cores 33 and the respective heating coils 34 are arranged so as to have a space corresponding to the distance between the respective heating members 21 and so that the magnetic fluxes generated by the respective heating coils 34 do not mutually interfer. The heating members 21 can pass the space between the respective heating coils 34. The infrared ray radiant heat thermometers 32 are also arranged at three portions corresponding to the upper, intermediate and lower portions of the heating member 21 so as to suitably measure the temperatures of these portions. These thermometers 32,32--- are operatively connected to power control devices, not shown, to regulate the electric power supplied to the heating coils 34 in accordance with the measured temperatures.

Accordingly, the heating members 21 can be heated to the predetermined temperature by preliminarily establishing the relationship between the temperature difference between the detected temperatures of the infrared ray radiant heat thermometers 32 and the set temperatures of the heating members 21 and the electric power amount required to heat the heating members 21 to the set temperatures and by supplying the electric power determined by the relationship to the second induction heating coils 29. The electric power may be set to be uniformly applied with respect to the upper, intermediate and lower portions of the heating member 21, so as to have a predetermined temperature distribution with respect to these portions. Alternatively an optional distribution of the radiant heat energy on the heating member 21 and the preform 1 can be derived so that the preform 1 can be heated in the most suitable manner taking into account the thicknesses of the respective portions of the preform 1.

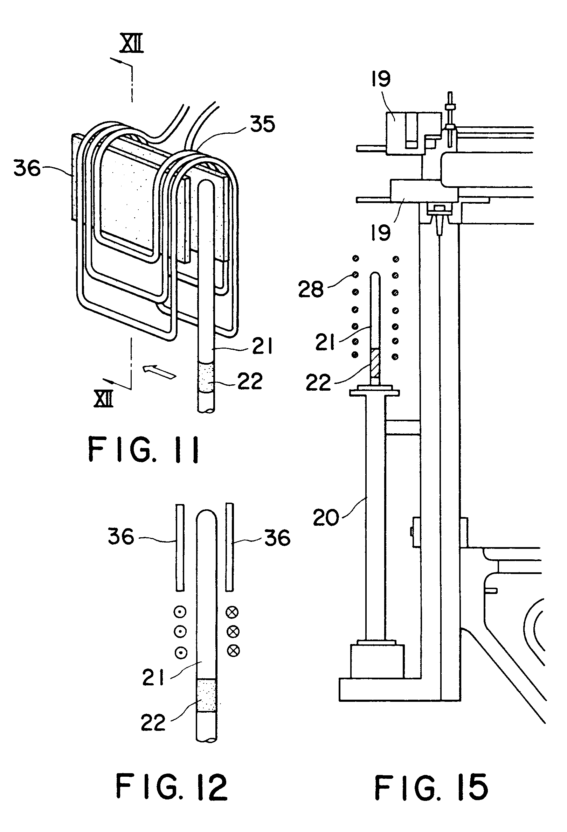

The arrangement of the second induction heating coil 29 may be made as shown in Figs. 11 and 12, by which the heating efficiency for the heating members 21 will be improved in comparison with the arrangement shown in Fig. 9.
In Fig. 9, reference numeral 36 designates a copper plate which serves to blank the heating operation at a portion facing the copper plate 36 so as to give rise to partial heating of the heating member 21. The first induction heating coil 28 and the second induction heating coils 29, 30 and 31 disposed in the heating member heating zone 27 are designed, as shown respectively in Figs. 7, 10, 12 and 14, so that reverse directional high frequency electric currents flow through the coils facing each other with the heating member 21 interposed therebetween. Although in the illustrated and described embodiment, the heating coils are arranged in three separate stages, the present invention is not limited to this arrangement.

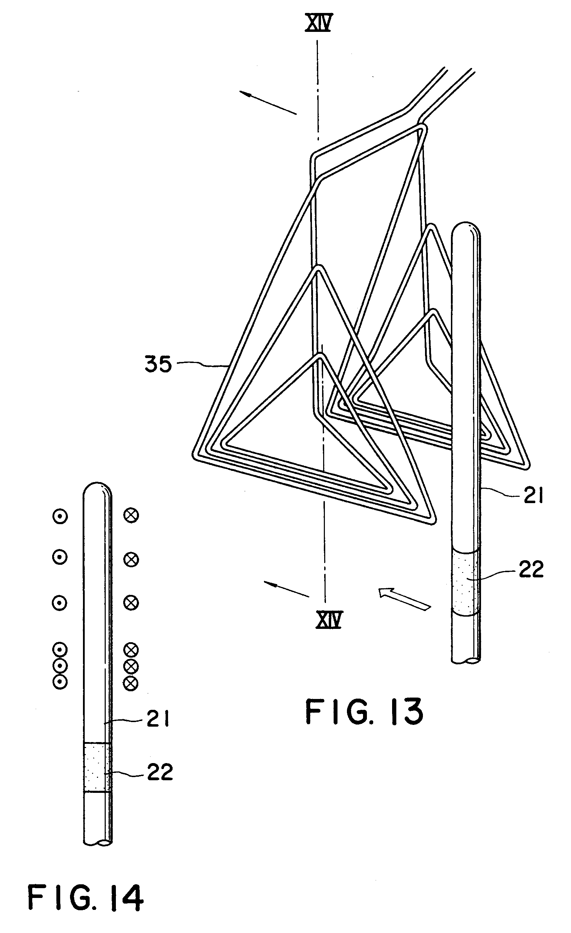

The radiant heat energy distribution along the longitudinal direction of the heating member 21 may be varied as shown in Figs. 13 and 14 by varying winding pitches of the heating coils. Referring to Figs. 13 and 14, the coils 35 each are triangular in shape and are wound such that the bottom sides of the triangular coils 35 mutually overlap but the apices of the respective triangles are positioned at different levels. According to this arrangement, the magnetic density is relatively large at the bottom side portions of the coils and relatively small at the apices thereof. Therefore, when the heating member 21 and the coils 35 are completely electromagnetically coupled, a temperature distribution is formed in accordance with the shapes of the coils 35. In addition, since a small amount of power is applied to those coil portions at which the distances between coil sides is larger the heating efficiency is further improved. Moreover, since the distance between the two spiral coils is so small but large enough that the heating member 21 is not contacted the magnetic fluxes are denied externally of the coils 35, so that even when the heating member 21 is disposed slightly away from the coil arrangement, the heating member 21 is hardly heated. Accordingly, the effective length of the coil for substantially heating the heating member 21 is clearly defined. Although only one of the two spiral coils can be used as a heating coil, a good heating efficiency cannot be attained and the effective length of the coil may not be clearly defined.

In a modified method for applying a radiant heat energy to the heating member 21 which energy is variable in the lengthwise direction of the heating member, it may be possible to vary the outer diameter of the heating member 21, and in this modified method, it is not always necessary to vary the temperature in and along the lengthwise direction thereof. For example, when a barge amount of radiant heat energy is applied to a thickened portion such as a bottom of the preform 1, the front portion of the heating member 21 is elongated to increase the accumulated heat amount. This operation may be of course be applied to any longitudinal portion of the heating member 21 instead of the front portion. Alternatively, a heat insulating member is located at a portion of the heating member 21 to shut out the radiant heat energy to that portion to thereby suppress the temperature rise in that portion of the preform 1.

Accordingly, the heating member 21 can be always maintained at a predetermined temperature by the heating member heating zone 27 to thereby not only maintain the temperature entirely uniformly but also apply the temperature distribution to the desired portions to the heating member 21 by easily adjusting the winding pitches of the heating coils or electric power to be applied to the coils. In addition, the variation of the outer diameter of the heating member 21 in the lengthwise direction makes it possible to optionally distribute the radiant heat energy along that direction. Thus, the preform 1 can be set in a predetermined temperature and a thermoplastic bottle 2 can be manufactured under the most suitable conditions. In the preferred embodiment described above, the heating units 26 for externally heating the preforms 1 are arranged along the outer circumferential portion of the circulating path but the present invention is not limited to the described embodiment and the heating units 26 may be arranged along the inner circumferential portion as well as the outer circumferential portion of the path. An air blowing device may be further disposed for blowing air towards the heating member 21 to prevent the heating member 21 from overheating and to cool the same.

When starting operation of the forming machine, it is necessary to heat the heating member 21 to a predetermined temperature from the room temperature in a short time, but the respective portions of the heating member 21 are different in the degrees of their radiant heat during the circulation among the respective stations or tables, and particularly, the radiant heat of the lower portions of the heating member 21 is observed to be large and the temperature of that portion is largely lowered because that portion is connected to the heat insulating member 22 and the piston rod 23. Even in such a case where the temperature variation in elapsed time is different at the respective portions of the heating member 21, it can be easily heated to the predetermined temperature by the arrangement and method described above.

The first induction heating coil 28 for constant heating may be eliminated in one modification by increasing the heating capacity of the second induction heating coils 29, 30 and 31. It is preferred to heat the heating member 21 to a temperature ranging between about 300 to 600°C. This is because, below 300°C, the radiant heat is too small to attain the desired heating efficiency from the inside of the preform 1 having large thickness, whereas over 600°C, the inner surface of the preform is overheated in comparison with the outer surface or the central portion, thus the uniform heating effect is not achieved. In a test, when the heating member 21 was heated to above 600°C, violent degradation due to the oxidation was observed, this being not suitable for the practical use.

As described above with reference to the preferred embodiment of the present invention, the method of the present invention is very effective in view of the high speed heating and the uniform heating, but where the preform 1 inserted into the mandrel core portion 37, as shown in Fig. 16, is rotated in an eccentric manner, the preform may be circumferentially nonuniformly heated because of the insertion of the heating member 21 close to the inner surface of the preform 1. Such eccentric rotation of the preform 1 is caused by the relationship between the unevenness of the inner diameters of the mouth portions of the preforms 1 and the core diameter of the mandrel 3 or by differences in the inserting methods of the preforms 1, and the extent of the eccentricity is different with respect to each mandrel 3. In order to obviate this fault, the mandrel core 37', as shown in Fig. 17, is manufactured with a slotted springy member endowed with resiliency so as to be slightly outwardly expanded before the mounting of the preform 1, and in addition, the preform is forcibly mounted against the resilience of the springy member while maintaining the direction of the preform 1 so as to accord with the axis of the mandrel 3. By virtue of this mounting or inserting method, the eccentricity of the preform 1 is hardly observed, and a value e of the diameter eccentricity, shown in Fig. 16, was regulated within one fifth of the inner diameter of the preform 1 and the circumferentially uniform heating was attained. The value e of the diameter eccentricity is preferably below one tenth of the inner diameter of the preform 1, and in this case non-uniform heating based on this eccentricity will be substantially eliminated. The rotational movement of the preform 1 may be reduced or substantially eliminated by locating a guide member for restricting the movement of the front portion of the preform 1.

Next, is disclosed another example of the heating member 21, in which a substance fusable at a temperature range of the heating member 21 is enclosed in the interior thereof.

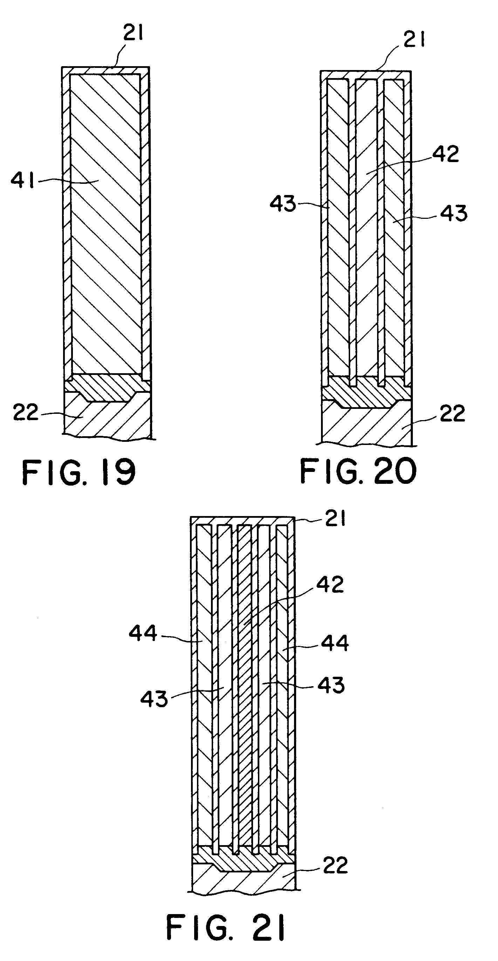

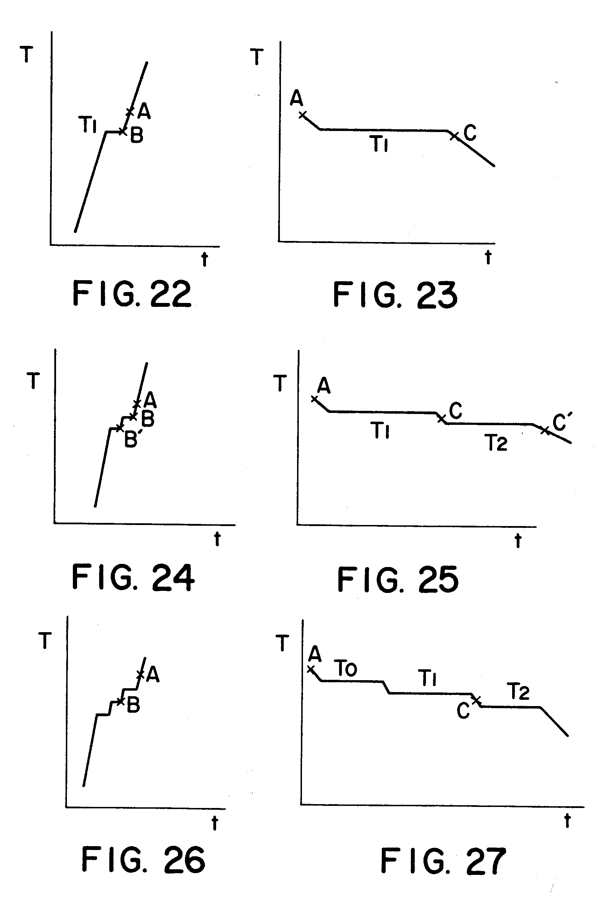

Fig. 19 shows one example of the hollow heating member 21 provided with an inner cavity 41 into which zinc having melting point of 420°C is enclosed, but the outer configuration of the heating member 21 shown in Fig. 19 is substantially the same as that of the former embodiments. When the heating member 21 of this hollow type is heated in the heating zone 27 of the heating station table 6, the heating member 21 is heated in accordance with the temperature risinig curve shown in Fig. 22. When the heating member 21 is heated to the point A on the curve of Fig. 22, the heating member 21 is cooled in accordance with the cooling curve shown in Fig. 23. Namely, the heating member 21 has substantially no change for a time interval at the temperature T1 even if the thermal energy is applied or released by the latent heat of the fused metal enclosed into the interior of the heating member 21. Accordingly, by heating the heating member 21 to the point B in Fig. 22, i.e. until the enclosed zinc has been completely melted, and inserting the thus heated heating member 21 into the preform 1, the preform 1 can be heated by the heating member 21 maintaining this temperature for the long time period, thus being capable of heating the preform 1 with the exactly controlled temperature. Referring to Fig. 22, a letter t denotes time, T denotes the temperature of the heating member 21 and T1 is the melting point of the enclosed zinc. Where it is detected by the infrared ray radiant heat thermometer 32 that the temperature of the heating member 21 does not reach the melting point T1 of an enclosed metal, for example point C in Fig. 23, high frequency electric power programmed in accordance with the temperature difference from the melting point, as shown in Fig. 22, is applied to the second induction heating coil 29 for an extremely short time interval (0.5 sec.) to heat the metal enclosed in the heating member 21 preferably to a state at which the enclosed metal has been entirely liquefied, i.e. to the point B.

Fig. 20 shows another example of a hollow heating member 21, which is provided with a first inner cavity 42 and a second inner cavity 43 into which high and low melting point metals are enclosed, respectively. Zinc is utilized as the high melting point metal and tin-tellurium alloy is utilized as the low melting point metal of the composition essentially consisting of 15% of tin and 85% of tellurium, which will cause an eutectic structure and an eutectic stagnation temperature corresponding to the melting point is about 410°C. Fig. 21 also shows a further example of the hollow heating member 21 provided with first, second and third inner cavities 42, 43 and 44 into which tin-tellurium alloy, zinc and tellurium are enclosed, respectively, and the composition of the tin-tellurium alloy of Fig. 21 is the same as that of Fig. 20, the melting point of tellurium being about 450°C.

Concerning the second example of the heating member 21 shown in Fig. 20, the temperature elevation curve of the heating member 21 is represented by Fig. 24 and the natural cooling curve thereof is represented by Fig. 25, and in the figures, a letter T2 denotes the melting point of a low melting point metal, i.e. the tin-tellurium alloy. The temperature control of the heating member 21 of the second example is made by substantially the same manner as that of the first example, and for instance, in a case where the melting point is a temperature of point C in Fig. 25, electric power is applied to the second induction heating coil 29 to increase the temperature to the point B in Fig. 24. In this case, even if it is erroneously detected that the heating member has a high temperature in spite of the detection fault of the radiant heat thermometer 32, the temperature of the heating member 21 is not lowered too much in view of the heat of solidification of the tin-tellurium alloy. Moreover, when the target temperature to be controlled is selected to the point C', the temperature is controlled so as to raise the temperature to the point B'. However, even if the temperature difference is erroneously detected as a value larger than the exact value because of a fault of the thermometer and, as a result, excessive electric power is supplied to the second induction heating coil 29, the temperature of the heating member 21 is not raised too much because of heat of fusion of the enclosed zinc, thus providing excellent controlling.

Concerning the third example of the hollow heating member 21 shown in Fig. 21, the temperature elevation curve of the heating member 21 is represented by Fig. 26 and the natural cooling curve thereof is represented by Fig. 27, in which letter T0 denotes melting point of tellurium. When the temperature of the point C in Fig. 27 is detected, substantially the same control as that of the first and second example is made so as to raise the temperature to the point B in Fig. 26, but control with greater accuracy can be made by enclosing three kinds of metals having different melting point into the inner cavities of the hollow heating member 21. The heating capacity of the heating member heating zone 27 and the amount of the metals enclosed are set so as not to allow the enclosed metals to solidify during the circulation of the heating member 21. Accordingly, in use, the enclosed metals are partially liquid and partially solid during the circulation of the heating member around the heating station table 6, so that the temperature of the heating member 21 can be kept substantially constant during circulation. For example the temperature of the heating member 21 of the first example is kept to about 420°. Regarding the heating member 21 of the second example, where the controlling point is selected to be the point C in Fig. 25, the temperature of the heating member 2 is kept to about 420°C and where the controlling point is selected to be the point C', the temperature is kept to about 410°C. The temperature of the heating member 21 of the third example is stably kept to about 420°C. Accordingly, since the preforms 1 can be heated by the heating members 21 having exactly controlled temperatures, plastic bottles 2 with high quality can be manufactured.

With the preferred embodiments described above, although the heating member 21 is made of metal and heated inductively, this invention is not limited to those embodiments and the heating members 21 may be made of ceramics and heated by infrared ray heaters.

A method of crystalizing the mouth portion of 16 of the preform 1 using the heating method described hereinbefore will be described hereunder with reference to Fig. 18. The crystallization of the mouth portion 16 is for the purpose of improving the stiffness and the heat resistance of the mouth portion 16 of the preform 1. The heating member 21 is inserted into the mouth portion 16 of the preform 1 or plastic bottle 2 attached to the heating means such as the heating station table 6 and the mouth portion 16 is heated by an infrared ray collecting device 51 of the type shown in Fig. 18. The infrared ray collecting device 51 comprises a reflecting mirror 52 having an elliptical section disposed about a linear infrared ray heater 53, which is arranged on one focus of the elliptical reflecting mirror 52, and the mouth poriton 16 is arranged on the other focus thereof. Any structure described above of the heating member 21 may be selected and any heating means may also be selected. According to this method, the mouth portion 16 can be easily and exactly crystalized by the most suitable manner as well as the below formation of the preform 1.

As described hereinbefore, according to this invention, since the temperature of the heating member for internally heating the proform is measured and the heating of the heating member is controlled in accordance with the measured temperature, the setting of the temperature can be accurately done in a short time, thus improving the manufacturing capability. Radiant heat energy variable in the lengthwise direction of the heating member can be effectively distributed therealong, so that the respective portions of the preform can be heated to predetermined temperatures suitable for the blow-formation of the plastic bottle. Moreover, since substances having predetermined melting points are enclosed in the hollow heating member, the temperature of the heating member can be controlled so as to stably maintain the temperature within relatively narrow range even if the absorbing heat amount or radiant heat amount varies significantly by setting the common temperature of the substances to target control temperature. Therefore, the preforms can be always constantly heated by utilizing such heating members as heating source for the preforms adapted to form plastic products such as plastic bottles, thus improving the quality of the formed products. In addition, in case the heating method described above is utilized for heating the mouth portion of the preform, the crystallization of that portion can be also speedily and exactly performed.

## Claims

1. A method of heating a thermoplastic bottle (2) or preform (1) comprising the steps of:
i) providing a plurality of heating members (21) for insertion into an inner hollow portion of the bottle (2) or preform (1) which are disposed at substantially equal intervals and movable along a circulation path,
ii) providing a heating unit (26) outside the bottle (2) or preform (1) for heating the bottle or preform externally,
iii) inserting a heating member (21) into the bottle (2) or preform (1),
iv) simultaneously heating in a first heating zone the bottle (2) or preform (1) internally by the heating member (21) and externally by the heating unit (26),
characterised by
measuring the temperature of the heating member (21) prior to insertion into the bottle or preform (2,1) and inductingly heating in a second heating zone the heating member (21) to a predetermined temperature in accordance with any difference between the measured predetermined temperature.

2. A method as claimed in claim 1, wherein an infrared ray collecting device (51) is arranged so as to oppose to a mouth portion (16) of the bottle (2) or preform (1) to be heated to thereby heat the bottle (2) or preform (1).

3. A method as claimed in claim 1, wherein a maximum eccentricity (e) of the bottle (2) or preform (1) to be heated in rotation is limited below one fifth of an inner diameter thereof.

4. A method as claimed in claim 1 or 2, wherein the heating member (21) is heated with two heating stages, one being with a predetermined heating amount and the other being with a heating amount for amending temperature difference between the heating member (21) and the predetermined temperature.

5. A method as claimed in claim 1 or 2, wherein the heating member (21) is heated so as to have a radiant heat energy distribution varied along an axial length of the heating member (21) so as to apply a heat distribution to the bottle (2) or preform (1).

6. A method as claimed in claim 5, wherein the heating member (21) is provided with respective portions having outer diameters different from each other so as to create an axially varied radiant heat energy distribution to the bottle (2) or preform (1).

7. A method as claimed in claim 5, wherein the heating is high frequency induction heating effected by an induction heating coil (27) having winding pitches varied along a lengthwise direction of the heating member (21) so as to create an axially varied radiant heat energy distribution to the bottle (2) or preform (1).

8. The method as claimed in claim 5, wherein the heating induction heating coil (27) is high frequency induction heating effected by and divided into plural portions in an axial direction of the heating member (21) and electric power to be applied to the thus divided induction heating coil portions (27) is controlled to thereby create an axially varied radiant heat energy distribution to the bottle (2) or preform (1).

9. A method as claimed in any one of the preceding claims, wherein the heating member (21) is provided with an inner cavity (41) into which is enclosed a substance having a melting point within a target control temperature.

10. A method as claimed in claim 9, wherein the heating member (21) is provided with at least two inner cavities (42,43) into which are enclosed substances having melting points different from each other.

11. A method as claimed in claim 9 or 10, wherein a heat amount in proportion to a temperature difference between the temperature of the heating member (21) and the melting point of the enclosed substance is applied to the heating member (21).

## Patentansprüche

1. Verfahren zum Erwärmen einer thermoplastischen Flasche (2) oder eines Vorformlings (1), umfassend folgende Stufen:
(i) Bereitstellen einer Mehrzahl von in im wesentlichen gleichen Abständen und bewegbar entlang einer Umlaufbahn angeordneten Heizelementen (21) zum Einsetzen in einen inneren Hohlbereich der Flasche (2) oder des Vorformlings (1),
(ii) Bereitstellen einer Heizeinheit (26) außerhalb der Flasche (2) oder des Vorformlings (1) zum Erwärmen der Flasche oder des Vorformlings von außen,
(iii) Einsetzen eines Heizelements (21) in die Flasche (2) oder den Vorformling (1),
(iv) gleichzeitiges Heizen der Flasche (2) oder des Vorformlings (1) von innen durch das Heizelement (21) in einer ersten Heizzone und von außen durch die Heizeinheit (26),
dadurch gekennzeichnet, daß man
die Temperatur des Heizelements (21) vor dem Einsetzen in die Flasche oder den vorformling (2, 1) mißt und das Heizelement (21) in einer zweiten Heizzone induktiv auf eine vorbestimmte Temperatur in Abstimmung mit einer etwaigen Differenz zwischen der gemessenen und der vorbestimmten Temperatur erwärmt.

2. Verfahren nach Anspruch 1, wobei eine Infrarotstrahlen-Sammelvorrichtung (51) so angeordnet ist, daß sie einem Mundbereich (16) der zu erwarmenden Flasche (2) oder des Vorformlings (1) gegenüberliegt, um dadurch die Flasche (2) oder den Vorformling (1) zu erwärmen.

3. Verfahren nach Anspruch 1, wobei eine maximale Exzentrizität (e) der zu erwärmenden Flasche (2) oder des Vorformlings (1) bei der Drehung auf weniger als 1/5 ihres Innendurchmessers begrenzt ist.

4. Verfahren nach Anspruch 1 oder 2, wobei das Heizelement (21) in zwei Heizstufen erwärmt wird, wovon eine mit einem vorbestimmten Heizanteil erfolgt und die andere mit einem Heizanteil erfolgt, um die Temperaturdifferenz zwischen dem Heizelement (21) und der vorbestimmten Temperatur auszugleichen.

5. Verfahren nach Anspruch 1 oder 2, wobei das Heizelement (21) so erwärmt wird, daß sich eine entlang einer axialen Länge des Heizelements (21) variierende Strahlungswärme-Energieverteilung ergibt, was zu einer Verteilung der der Flasche (2) oder dem Vorformling (1) zugeführten Wärme führt.

6. Verfahren nach Anspruch 5, wobei das Heizelement (21) mit entsprechenden Abschnitten versehen ist, deren Außendurchmesser sich voneinander unterscheiden, so daß eine in axialer Richtung variierende Strahlungswärme-Energieverteilung für die Flasche (2) oder den Vorformling (1) geschaffen wird.

7. Verfahren nach Anspruch 5, wobei es sich beim Heizvorgang um eine Hochfrequenz-Induktionsheizung handelt, die durch eine Induktionsheizspule (27) erfolgt, deren Wickelteilungen entlang einer Längsrichtung des Heizelements (21) variieren, so daß eine in axialer Richtung variierende Strahlungswärme-Energieverteilung für die Flasche (2) oder den Vorformling (1) geschaffen wird.

8. Verfahren nach Anspruch 5, wobei es sich bei der Induktionsheizspule (27) um eine Hochfrequenz-Induktionsheizung handelt, die in axialer Richtung des Heizelements (21) in mehrere Abschnitte unterteilt ist, wobei die den auf diese Weise unterteilten Abschnitten der Induktionsheizungsspule zugeführte elektrische Leistung so gesteuert wird, daß eine in axialer Richtung variierende Strahlungswärme-Energieverteilung für die Flasche (2) oder den Vorformling (1) geschaffen wird.

9. Verfahren nach einem der vorstehenden Ansprüche, wobei das Heizelement (21) mit einem inneren Hohlraum (41) versehen ist, in dem eine Substanz mit einem Schmelzpunkt innerhalb eines Zielkontrollbereichs eingeschlossen ist.

10. Verfahren nach Anspruch 9, wobei das Heizelement (21) mit mindestens zwei inneren Hohlräumen (42, 43) versehen ist, in denen Substanzen eingeschlossen sind, deren Schmelzpunkte sich voneinander unterscheiden.

11. Verfahren nach Anspruch 9 oder 10, wobei eine Wärmemenge entsprechend einer Temperaturdifferenz zwischen der Temperatur des Heizelements (21) und dem Schmelzpunkt der eingeschlossenen Substanz dem Heizelement (21) zugeführt wird.

## Revendications

1. Procédé de chauffage d'une bouteille (2) ou d'une préforme (1) thermoplastique, dans lequel :
i) il est prévu une pluralité d'organes de chauffage (21) à insérer dans une partie creuse intérieure de la bouteille (2) ou de la préforme (1), qui sont disposés à des intervalles sensiblement égaux et peuvent se déplacer sur une trajectoire de circulation,
ii) il est prévu un ensemble de chauffage (26) à l'extérieur de la bouteille (2) ou de la préforme (1), pour chauffer extérieurement la bouteille ou la préforme,
iii) on insère un organe de chauffage (21) dans la bouteille (2) ou la préforme (1),
iv) on chauffe simultanément, dans une première zone de chauffage, la bouteille (2) ou la préforme (1), intérieurement par l'organe de chauffage (21) et extérieurement par l'ensemble de chauffage (26),
caractérisé par le fait que :
on mesure la température de l'organe de chauffage (21) avant l'insertion dans la bouteille ou préforme (2, 1) et on chauffe par induction, dans une seconde zone de chauffage, l'organe de chauffage (21) à une température prédéterminée, en fonction de toute différence entre températures mesurée et prédéterminée.

2. Procédé selon la revendication 1, dans lequel un dispositif collecteur de rayons infrarouges (51) est disposé à l'opposé d'une partie formant goulot (16) de la bouteille (2) ou de la préforme (1) à chauffer, de manière à chauffer la bouteille (2) ou la préforme (1).

3. Procédé selon la revendication 1, dans lequel une excentricité maximale (e) de la bouteille (2) ou de la préforme (1) à chauffer en rotation est limitée à une valeur inférieure à un cinquième de son diamètre intérieur.

4. Procédé selon la revendication 1 ou 2, dans lequel l'organe de chauffage (21) est chauffé en deux étapes de chauffage, l'une étant exécutée avec une quantité de chauffage prédéterminée et l'autre avec une quantité de chauffage servant à corriger une différence de température entre l'organe de chauffage (21) et la température prédéterminée.

5. Procédé selon la revendication 1 ou 2, dans lequel l'organe de chauffage (21) est chauffé de manière à présenter une distribution d'énergie calorifique rayonnante variant sur la longueur axiale de l'organe de chauffage (21), de manière à appliquer une distribution de chaleur à la bouteille (2) ou à la préforme (1).

6. Procédé selon la revendication 5, dans lequel l'organe de chauffage (21) est pourvu de parties respectives présentant des diamètres extérieurs différents entre eux, de manière à produire une distribution d'énergie calorifique rayonnante sur la bouteille (2) ou la préforme (1).

7. Procédé selon la revendication 5, dans lequel le chauffage est un chauffage par induction à haute fréquence, effectué par une bobine de chauffage par induction (57) présentant des pas d'enroulement variant dans le sens de la longueur de l'organe de chauffage (21), de manière à produire une distribution d'énergie calorifique rayonnante, variant axialement, sur la bouteille (2) ou la préforme (1).

8. Procédé selon la revendication 5, dans lequel le chauffage de la bobine de chauffage par induction (27) est un chauffage par induction à haute fréquence, effectué par et divisé en plusieurs parties dans une direction axiale de l'organe de chauffage (21) et une puissance électrique, destinée à être appliquée sur les parties de bobine de chauffage par induction (27) ainsi divisées, est commandée de manière à produire une distribution d'énergie calorifique rayonnante, variant axialement, sur la bouteille (2) ou la préforme (1).

9. Procédé selon l'une quelconque des revendications précédentes, dans lequel l'organe de chauffage (21) est pourvu d'une cavité intérieure (41) dans laquelle est enfermée une substance présentant un point de fusion situé à une températures cible.

10. Procédé selon la revendication 9, dans lequel l'organe de chauffage (21) est pourvu d'au moins deux cavités intérieures (42, 43), dans lesquelles sont enfermées des substances présentant des points de fusion différents entre eux.

11. Procédé selon la revendication 9 ou 10, dans lequel une quantité de chaleur proportionnelle à une différence de température entre la température de l'organe de chauffage (21) et le point de fusion de la substance contenue est appliquée à l'organe de chauffage (21).
